(19)

Europäisches
Patentamt
European
Patent Office
Office européen
des brevets

(11) **EP 2 447 890 A1**

(12) **EUROPEAN PATENT APPLICATION**

(43) Date of publication:
 **02.05.2012 Bulletin 2012/18**

(21) Application number: **10306119.8**

(22) Date of filing: **14.10.2010**

(51) Int Cl.:
 *G06Q 10/00* (2012.01)    *G06Q 50/00* (2012.01)

(84) Designated Contracting States:
 **AL AT BE BG CH CY CZ DE DK EE ES FI FR GB GR HR HU IE IS IT LI LT LU LV MC MK MT NL NO PL PT RO RS SE SI SK SM TR**
 Designated Extension States:
 **BA ME**

(71) Applicant: **Amadeus S.A.S.**
 **06410 Biot (FR)**

(72) Inventors:
 • **Pauchet, David**
  **06250, Mougins (FR)**
 • **Dourthe, Cédric**
  **06000, Nice (FR)**

(74) Representative: **Hautier, Nicolas**
 **Cabinet Hautier**
 **20, rue de la Liberté**
 **06000 Nice (FR)**

(54) **System and method to provide a user with a set of solutions in response to a query**

(57)  An aspect of the exemplary embodiments is an on-line system that includes an interface with system users (5) configured to receive search requests from system users (5). The system further includes a search engine (20) coupled with the interface. The search engine (20) is configured to respond to a received search request from a user to perform a search that considers priceable criteria and a non-priceable criterion, where a weight of the non-priceable criterion to be accorded during the search relative to the priceable criteria is specified by the user (5). The search engine (20) is further configured to return search results to the user via the interface. As an example, the search may be a travel-related search, the priceable criteria can include at least a fare amount, and the non-priceable criterion can include a universal criterion such as an ecology-related criterion.

**FIGURE 8**

## Description

TECHNICAL FIELD

The exemplary embodiments of this invention relate generally to automated reservation systems such as travel-related reservation systems and, more specifically, relate to techniques for searching for travel products based on both priceable and non-priceable criteria.

BACKGROUND

Presently some Web products propose travel pricing requests that include some ecology-related information. However, the ecological information is not used to rank recommendations, and any environmental impact is simply displayed in an informative way to a user, such as at the end of the process. No travel products are known to the inventors that propose recommendations ranked solely on an non priceable criterion such as an environmental criterion, or ranked on some compromise between an non priceable criterion such as an environmental criterion and fare price criterion.

SUMMARY

The foregoing and other problems are overcome, and other advantages are realized, in accordance with the embodiments of this invention.

In a first aspect thereof the exemplary embodiments there is a method to provide a user with a set of solutions in response to a query of the user.

The method comprises receiving a search request from the user; performing with at least one data processor a search that considers priceable criteria stored in data storage means. The search also considers at least a non-priceable criterion. A weight of the non-priceable criterion to be accorded during the search relative to the priceable criteria is specified by the user. The weight of the non-priceable criterion is converted to a priceable amount. Search results are returned to the user through display means.

Preferably, the method according to the invention comprises at least one of the following optional features:

- The method comprises an additional step of ranking the results after the at least priceable criterion and the non-priceable criterion have been considered.
- The weight is specifiable by the user from 0% to 100%, where 0% indicates that the non-priceable criterion is to be given no weight during the search and that the search should consider only the priceable criteria, and where 100% indicates that the non-priceable criterion is to be given all of the weight during the search and that the search should not consider the priceable criteria.
- The search is a travel-related search. The search results comprise a plurality of travel solutions each having an associated inherent cost comprising at least a fare cost.

Preferably, the priceable amount is positive and proportional to the inherent cost associated with each travel solution and increases in value as the value of the weight increases. A standard deviation of the priceable amount, divided by the inherent cost associated with a particular travel solution, is one.

- The search is a travel-related search. The search results comprise a plurality of travel solutions each having an associated inherent cost comprising at least a fare cost stored in data storage means. The priceable amount is positive and proportional to the inherent cost associated with each travel solution and increases in value as the value of the weight increases. A final cost of each reported travel solution comprises the sum of the inherent cost and the priceable amount.
- During the search a plurality of candidate travel solutions are identified prior to selecting a travel solution or travel solutions to be reported to the user. At least the priceable amount is added when selecting the travel solution or solutions.
- Candidate travel solutions are identified according to a first priceable criterion. Travel solution or solutions are selected through adding to the candidate travel solutions amounts of all other priceable criteria and the priceable amount of the non priceable criteria.
- During the search a plurality of candidate travel solutions are identified prior to selecting a travel solution or travel solutions to be reported to the user. At least the priceable amount is added to one or more candidate travel solutions prior to selecting the travel solution or solutions.
- Candidate travel solutions are identified according to a first priceable criterion. The priceable amounts of the non priceable criterion are added to the candidate travel solutions to provide intermediate travel solutions, and the selection of one or more travel solutions takes into account all other priceable criteria.
- The intermediate solution is compared to an already processed travel solution and the intermediate travel solution is discarded if said intermediate travel solution is more expansive than at least one already processed travel solution.
- The result of the search comprises a plurality of sub-travel-product each having an associated inherent cost comprising at least a fare cost. An intermediate solution is formed by combining the intermediate solution for all sub-travel-products and a final solution is obtained by taking into account the other priceable criteria for each sub-travel-product.
- The search is a travel-related search and the priceable criteria comprise at least a fare amount stored in data storage means. The non-priceable criterion is an ecology-related criterion.

- The search is a travel-related search. The priceable criteria comprise at least a fare amount, a tax amount and a surcharge amount, and the non-priceable criterion is related to an impact of the travel on the environment.

The invention also relates to a computer program product stored in a non-transitory computer-readable memory medium and comprising computer readable code means configured for causing at least one computer to operate the method according to any one of the preceding features.

Another subject matter of the invention is an online system comprising:

an interface with system users configured to receive search requests from system users; and a search engine coupled with said interface, characterized in that said search engine is configured to respond to a received search request from a user to perform a search that considers priceable criteria and a non-priceable criterion, where a weight of the non-priceable criterion to be accorded during the search relative to the priceable criteria is specified by the user, in that the system comprises a universal surcharge calculator coupled with said search engine and configured to convert the weight of the non-priceable criterion to a priceable amount, and in that the search engine is configured to return search results to the user via said interface

Preferably, the system according to the invention comprises at least one of the following optional features:

- The search is a travel-related search, where the priceable criteria comprise at least a fare amount, and where the non-priceable criterion is an ecology-related criterion.
- The search may be a travel-related search, the priceable criteria can comprise at least a fare amount, and the non-priceable criterion can be for example an ecology-related criterion.
- The search engine communicates with a fare database.
- The priceable criteria comprise at least a fare amount, a tax amount and a surcharge amount, and where the non-priceable criterion is related to an impact of the travel on the environment.
- The weight is specifiable by the user from 0% to 100%. 0% indicates that the non-priceable criterion is to be given no weight during the search and that the search should consider only the priceable criteria, and 100% indicates that the non-priceable criterion is to be given all of the weight during the search and that the search should not consider the priceable criteria.

BRIEF DESCRIPTION OF THE DRAWINGS

The foregoing and other aspects of the embodiments of this invention are made more evident in the following Detailed Description, when read in conjunction with the attached Drawing Figures, wherein:

Figure 1 illustrates a conventional travel shopper with no non-priceable dimension such as an environmental dimension in a search that is conducted by a conventional search engine.

Figure 2 shows one example of presently preferred embodiment of a universal travel shopper that integrates an additional criterion to define a best travel solution for a user.

Figure 3 graphically shows conventional travel-related recommendations generated by the conventional travel shopper of Figure 1 that correspond to points in a three dimensional coordinate system that have the smallest distance to an origin (O).

Figure 4 graphically shows enhanced travel-related recommendations generated by the universal travel shopper of Figure 2 that correspond to points in a four dimensional coordinate system (defined by fare, surcharge, tax and universal surcharge (US)) that have the smallest distance to the origin.

Figure 5 shows the use of an *a posteriori* universal surcharge calculation during a search for a travel recommendation, while Figure 6 shows the use of an *a priori* universal surcharge calculation during a search for a travel recommendation.

Figure 7A shows an exemplary travel board that is based on fare price only, while Figure 7B shows an exemplary travel board that is based on a combination of fare price and a non-priceable criterion such as an ecological consideration, while Figure 7C shows an exemplary travel board that is based on a non-priceable criterion only such as on ecological consideration.

Figure 7D shows an exemplary calendar-based travel board that is based on fare price only, while Figure 7E shows an exemplary calendar-based travel board that is based on a combination of fare price and a non-priceable criterion such as an ecological consideration, while Figure 7F shows an exemplary calendar-based travel board that is based on a non-priceable criterion only such as on ecological consideration.

Figure 8 is a simplified system-level block diagram showing various components that are suitable for implementing the exemplary embodiments of this invention.

Figure 9 is a logic flow diagram that illustrates the operation of a method, and a result of execution of computer program instructions embodied on a com-

DETAILED DESCRIPTION

In the presence of potential climate global warming, among other threats to the well-being of the planet's ecosystem, people are now much more conscious of, and may take into consideration, the environmental impact of their everyday acts. Travel transportation is one such act. Travelers may also take into account other considerations to select their transportation service as described below.

The exemplary embodiments of this invention enable taking ecological and other considerations into a transportation travel fare search. Such a fare search has conventional priceable elements, including for instance fares, taxes and surcharges and, in accordance with the exemplary embodiments, at least one non-priceable element that may reflect the customer's travel choices.

The exemplary embodiments incorporate at least one dynamically universal criterion (e.g., ecology, human rights, size and / or quality of a meal, elapsed flying time, as several non-limiting examples) into a travel request pricing system, and provide a capability to search efficiently using at least one additional search dimension. This additional search dimension may be referred to, without a loss of generality, as a universal search dimension. These criterion and the value of these criterion are preferably stored in data storage means linked to the at least one processor carrying out the search.

The use of the exemplary embodiments offers a customer an ability to take into account different weights, such as a weight related to an ecological impact of a particular travel choice, in a travel search when using an automatic travel pricing system.

From the point of view of the travel provider, e.g., an airline, the system provides an easy and more accurate way to assess the impact of their flights regarding at least one criterion chosen by the customer (e.g. ecology), thus allowing the travel provider to adapt their fares and yields.

From the point of view of the travel facilitator, e.g., an on-line travel reservation and booking service, an enhanced travel search engine is provided that operates both on a travel-related cash (price) amount and on a universal weight. Various solutions of proposed applications can be computed and ranked using a mix of at least two different criteria: price amount and universal weight.

The use of the exemplary embodiments, when the universal criterion is ecology, further provides a valuable contribution to the overall reduction of undesirable emissions and other ecological-adverse factors.

The exemplary embodiments enable the use and consideration of a universal, non-priceable criterion (e.g., an ecology-related criterion such as an amount of emitted carbon dioxide) when deriving best or optimum travel-related recommendations using a dynamic search.

By the use of the exemplary embodiments a travel pricing system is enabled to incorporate dynamically universal criteria, where the impact of a travel choice becomes an additional criterion used in the dynamic searching process. The proportion of the universal impact can be varied and managed dynamically by the end user.

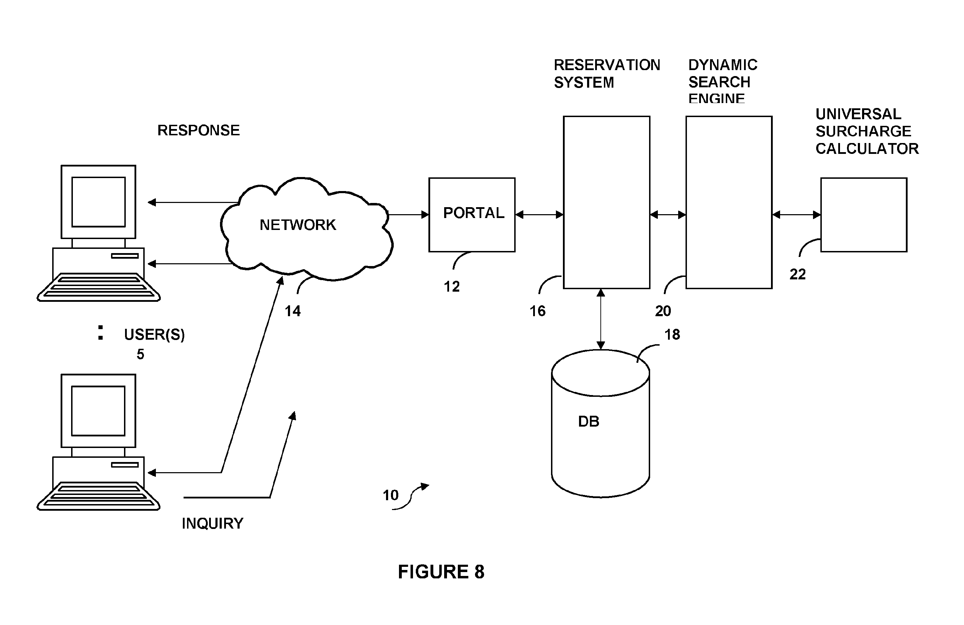

Before further describing the exemplary embodiments reference is made to Figure 8 for showing a simplified system-level block diagram of various components that are suitable for implementing the exemplary embodiments of this invention. In Figure 8 a system 10 includes a portal (interface) 12 to a network 14 (e.g., the Internet) whereby users 5 can make booking / reservation inquiries via respective user terminals, such as personal computers or smart phones. For a case of an on-line reservation system the portal 12 can include a web server. Connected / coupled with the portal 12 is a reservation system 16 having an associated reservation memory / database (DB) 18. The system 10 can also include an inventory system (not shown) having an associated memory / inventory DB. The system 10 can also include a revenue management system (not shown). The reservation system 16, the inventory system and the revenue management system can each be implemented using one or more suitable computer hardware / software platforms, and can be embodied as servers containing one or more data processors and associated memory storing computer software and data. The system 10 may be associated with, for example, a particular passenger airline, or it can be associated in whole or in part with an organization that handles travel inquiries and booking reservations for the passenger airline, and typically other airlines as well.

The reservation system 16 is assumed to have access to information by which the current fares charged for travel segments and groups of travel segments can be determined, changed as needed and quoted to the users 5.

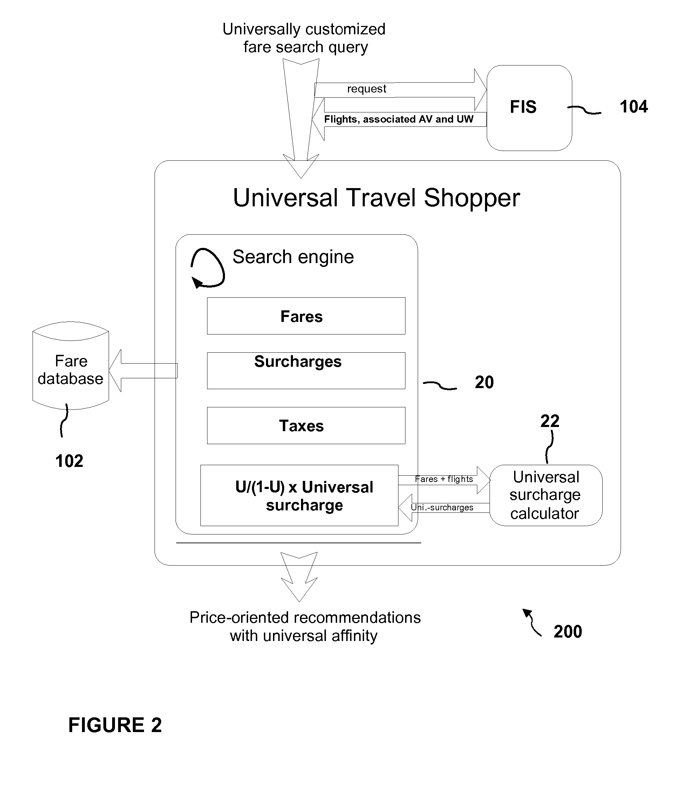

In accordance with the exemplary embodiments the reservation system 16 comprises or otherwise has access to a dynamic (fare) search engine 20 that is constructed and operated in accordance with the exemplary embodiments so as to enable the use and consideration of at least one universal, non-priceable criterion (e.g., one related to ecology) when deriving best travel-related recommendation responses for inquiries from the users 5. Related to this functionality is a universal surcharge calculator 22 that provides, as shown in Figure 2, universal surcharge data to the search engine 20 based on, for example, fares and flights. The universal surcharge data is used by the search engine 20 during the computation of price-oriented recommendations for users 5.

As opposed to a conventional fare search engine that operates in accordance with only price amount criteria, e.g., that searches for a minimum of fares+surcharges+taxes, the search engine 20 searches the minimum of, for example, fares+surcharges+taxes+universal surcharge.

As considered herein the fares+surcharges+taxes, or some sub-set thereof, may be considered to present an inherent cost, while the fares+surcharges+taxes+universal surcharge may be considered to represent a final cost.

If no data exists to directly transform a universal weight (e.g., an ecological weight) into a price (monetary value), it is transformed to a universal surcharge which can be integrated into the search process.

The following constraints can possibly arise.

(A) Monetary amounts and universal impact may not be easily compared (e.g., for ecology: money versus $CO_2$ tons).
(B) The impact of the universal surcharge should be representative of the user's inclination towards this criterion. As one example, an ecological consideration during the search may be assigned a value (weight) between 0% (no consideration at all) and 100% (sole, primary consideration).
(C) The universal surcharge is preferably dependent on the faring context: e.g., it should not be the same for both inexpensive discounted seats and expensive full fare seats.

Example for ecology: if ecology has an impact of 50% in the search of an Eco recommendation (100$ for the flight, 100$ of eco-surcharge), and if the impact remains constant whatever the pricing solution, the impact of ecology will be only 10% for a business recommendation ($1000 for the flight, $100 of ecology surcharge).

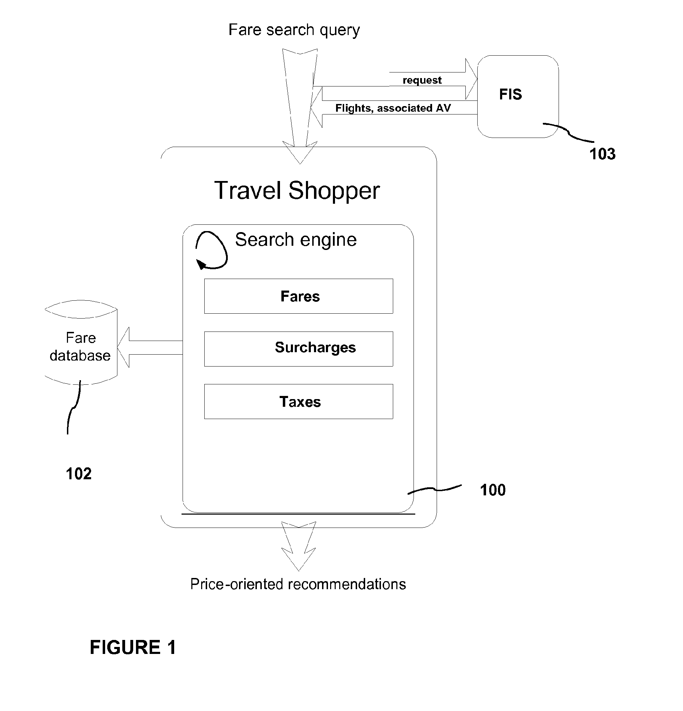

Figure 1 illustrates a conventional travel shopper with no environmental dimension in the search that is conducted by a conventional search engine 100. The search dimensions are fares, surcharges and taxes, and the only search criterion is the lowest price. In response to a fare search query the search engine 100 searches a fare database 102 to determine a search solution / result and provide price-oriented recommendations. Also shown in Figure 1 is a flight information system (FIS) 103 that receives a request based on the fare search query and that returns different possible combinations of flights that cover the requested itinerary, the availability (AV) for each flight, and other information.

There are several possible ways in which to modify the conventional travel shopper shown in Figure 1 to include a universal (e.g., an ecological) component / search dimension.

One possible approach would be to consider only the universal weight for the search and not the price. However, in practical a solution that offers either a 100% low-fare search or a 100% search on the universal would not be very useful.

Another possible approach would be to calculate the lowest price for a given journey, as is currently done, and then associate *a posteriori* universal surcharges to the search solutions. However, this approach does not guarantee that the search solution(s) are the best if one were to take into consideration simultaneously the price (fare amounts, surcharges, taxes) and the universal criterion (universal surcharges). For example, the low fare search engine may have ignored a more expensive recommendation which would have been the best in terms of the universal criterion.

Another possible approach is based on having derived a technique for comparing universal weights and prices, and then calculating a priced universal impact for all flights of the flight domain to be explored. However, this approach forces a calculation of a factor, e.g., a "priced universal impact", for all flights of a flight domain. As the number of flights can be large, it may typically become the case that some significant percentage of the possible flights will not be considered.

Figure 2 shows one example of a presently preferred embodiment of a universal travel shopper 200 that overcomes these various difficulties. The universal travel shopper 200 integrates an additional criterion to define the best solutions, provided by the flight information system (FIS) 104. This additional criterion may be referred to, without a loss of generality, as a "universal weight", e.g., a quantity of $CO_2$ emitted for an ecologically-related universal weight. The universal surcharge inferred from this additional criterion is weighted as $U/(1-U)$ where $0<U<1$ defines the proportion of the universal criterion in the search requested by a user 5.

More precisely, the additional criterion, which is not a priced value, is first transformed into a priceable amount designated universal surcharge. This transformation is further detailed below and enables to take into account the additional criterion in the search. Then, the universal surcharge is weighted by applying the $U/(1-U)$ factor.

In Figure 2 the universal travel shopper 200 receives a fare search query from a user 5 that is modified to include the universal criterion. The dynamic search engine 20 of Figure 8 then processes the modified fare search query using the fare database 102 as well as the universal surcharge calculator 22 to derive price oriented recommendations with a universal affinity. The universal surcharge calculator 22 is described in further detail below.

Also shown in Figure 2 is an enhanced flight information system (FIS) 104 that receives the request based on the fare search query and that returns different possible combinations of flights that cover the requested itinerary, the AV for each flight, and other information. The other information in this case can be the universal weight (UW) associated with the various flights.

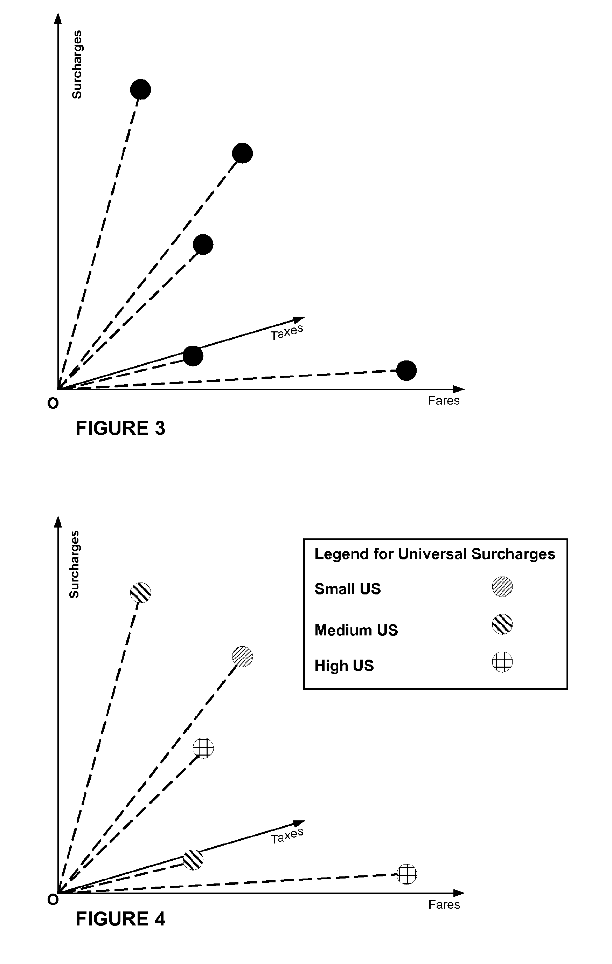

In the conventional travel shopper shown in Figure 1, in order to accommodate time constraints, the exploration of the three domains (fares, surcharges, taxes) is performed in parallel and dynamically. As is shown in Figure 3, the travel-related recommendations generated for the user 5 correspond to those points (in the three dimensional coordinate system defined by fare, surcharge and tax axes) that have the smallest distance to the origin (O).

In the universal travel shopper 200 shown in Figure 2, a fourth dimension is introduced to the search (see Figure 4). The objective is still to return those recommendations with the shortest distance to the origin, but in four dimensions (fares, surcharges, taxes and universal criterion-indicated by hatching). All calculated universal surcharges are balanced by the factor U/(1-U), where U is the importance of the universal criterion in the search, as selected by the user 5 (between 0 and 100%).

The universal travel shopper 200 solves the complexity of the new dimension, equivalent to a search on an average of $5.10^3$ new amounts that can be combined to the existing dimensions ($5.10^3$ is an average of the number of possible travel solutions).

There are at least two possible embodiments to deal with the added, new search dimension.

The non-limiting example of Figure 4 relates to NCE-SFO travel via NYC, where the user wants to have the best solution according to two criteria: price and universal surcharge (US). This non-limiting example assumes the use of a universal criterion which is ecology. Therefore, the universal surcharge can be considered as an eco-surcharge. The invention applies to any other non priceable criterion.

A) First embodiment, *a posteriori* universal surcharge (US) calculation

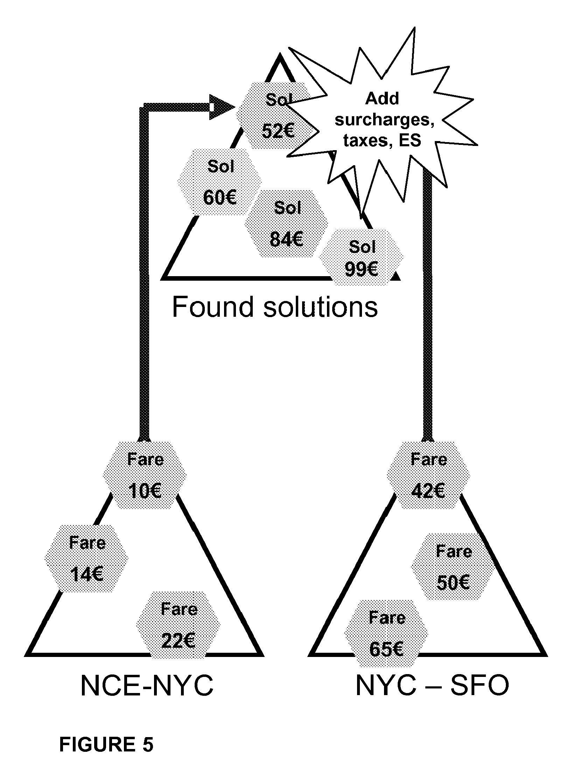

Referring to Figure 5, assume that several fares are loaded, ready to be used on city pairs NCE-NYC and NYC-SFO. The fares of each city pair are ordered within a 'low level heap'.

These fares form candidate solutions. The search engine determines a limit in each heap, defining thereby a top for each heap. The cheapest fares are gathered at the top of the heap. In case the product to be searched comprises sub products e.g., N flights for a given round trip travel for instance, the fares for each products are gathered into N separate heaps of a same level. Preferably, each fare of the top of a first low level heap is combined with each fare of the top of the other heaps of the same level. Each combination forms a combination of candidate solutions.

Candidate solutions or combinations of candidate solutions are then gathered in a heap of a higher level. Amounts corresponding to the other priceable criteria and universal surcharge are then added to each candidate solution or combinations of candidate solutions to provide a final solution. Preferably, cheapest candidate solutions or combinations of candidate solutions are processed first.

The cheapest final solutions are gathered at the top of the higher level heap. A predetermined number of final solutions that are at the top of the higher level heap are provided to the user.

More generally, solutions that related to a first priceable criterion are considered as candidate solutions.

Preferably, in case the product to be searched comprises sub products e.g., several segments for a given origin and destination journey, a candidate solution of a given sub product is combined with all candidate solutions of the other sub products. This combination forms also a candidate solution.

Thus, a candidate solution is formed either by a single candidate solution or by a combination of candidate solutions, each associated to sub products.

Final solutions are formed by adding candidate solutions to amounts corresponding to the other priceable criteria and the priceable amounts of the non priceable criterion i.e. the universal surcharge. Preferably the universal surcharge is weighted, according to user preferences for instance.

A predetermined number of cheapest final solutions is provided to the user.

Preferably, all candidate solutions are processed. Advantageously, lowest priceable candidate solutions are processed first.

Figure 5 illustrates through an example this search process. The search capture of Figure 5 is done at a time of the search when two solutions have already been created: at 60EUR and 99EUR. The cheapest fares at 10EUR and 42EUR are combined to form a new solution at 52EUR (base amount only). Then surcharges, taxes and eco-surcharges are calculated for this solution, which adds 32EUR to the price, thus giving 84EUR. The least expensive solution of the search is then 60EUR. However, it was necessary to calculate surcharges, taxes and eco-surcharges for the solution at 84EUR, which is avoided in the second embodiment that follows.

B) Second embodiment, *a priori* Universal Surcharge (US) calculation

According to this second embodiment, the low level heaps gather fares that are already added to the universal surcharge. More generally, the top of a low level heap gathers intermediate solutions that take into account one priceable criterion and the non priceable criterion. The best intermediate solutions are at the top of the low level heap.

Preferably, each intermediate solution of a low level heap is combined with each intermediate solution of heap(s) of the same level.

Intermediate solutions, in case there is a single heap, or combinations of intermediate solutions, in case there is a plurality of heaps, are then added to the amount of the other priceable criteria, providing thereby final solutions.

Preferably, cheapest intermediate solutions or combinations of intermediate solutions are processed first.

The cheapest final solutions are gathered at the top of the heap of a higher level. A predetermined number of final solutions that are at the top of the high level heap are provided to the user.

Note that in the event the eco-surcharge is not uniform over the flight domain applicable to the fare, the minimum applicable eco-surcharge is added at the city pair level, and the remainder is added to the solution once the flights to be used are defined.

More generally, the search engine retrieves solutions according to a first priceable criterion. Amounts of these candidate solutions are combined with priceable amounts of the non priceable criterion i.e. the universal surcharge that respectively applies for these candidate solutions. Preferably the universal surcharge is weighted, according to user preferences for instance.

These combinations constitute intermediate solutions.

In case the product to be searched comprises sub products e.g., several segments for a given origin and destination journey, an intermediate solutions of a given sub product are combined with all intermediate solutions of the other sub products.

Thus, an intermediate solution is formed either by a single intermediate solution or by a combination of intermediate solutions, each associated to a sub product.

Final solutions are formed by adding to each intermediate solution the amounts corresponding to the other priceable criteria that apply for that intermediate solution.

Upon calculation of an intermediate solution, the search engine compares said intermediate solution to final solutions already calculated. In case said intermediate solution is higher than already calculated final solutions, then said intermediate solution is discarded. Therefore, the calculation for that intermediate solution ends.

When amounts corresponding to the other priceable criteria are being added to an intermediate solution, the search engine compares the sum of each addition to already calculated final solutions. In case said sum is higher than the already calculated final solutions, then the intermediate solution being currently calculated is discarded. The calculation for that intermediate solution ends. Thus time and search capacity are optimized.

A predetermined number of cheapest final solutions is provided to the user.

Preferably all candidate solutions are combined to an amount related to said non priceable criterion.

Preferably, cheapest intermediate solutions are processed first.

Thus, the final solutions combine all solutions related to a first priceable criterion to amount of the non priceable criterion. Therefore no solution is discarded prior to taking into account the non priceable criterion. Consequently, the search engine according to the invention takes into account the non priceable criterion at a very early stage of the search contrarily to a basic search engine that would firstly retain only best candidate solutions related to a first priceable criterion and secondly add an amount related to another criterion. With such basic search engine, it is very likely that the search will discard good final solutions that combine a high amount related to a first priceable criterion and a low amount related to another criterion.

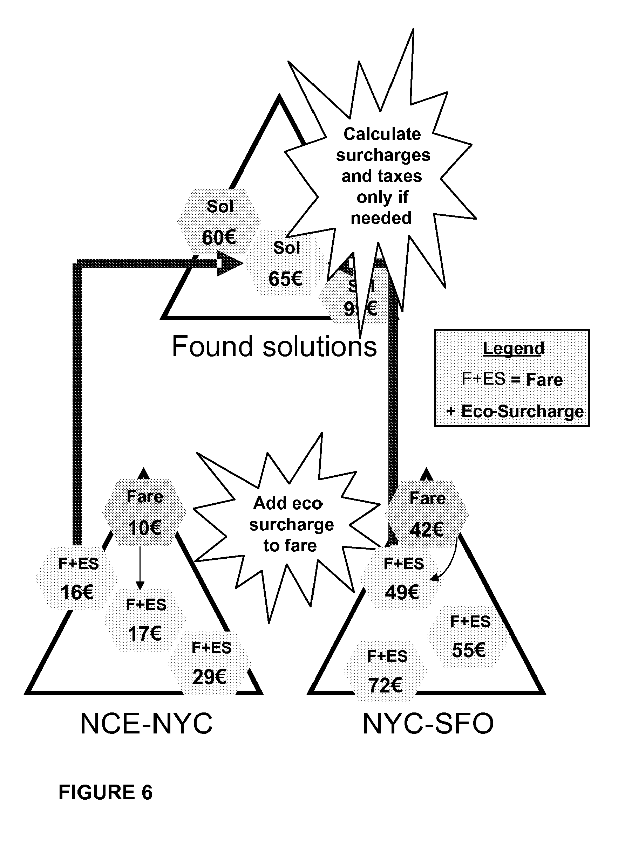

Referring to Figure 6, the heaps again represent the city pairs NCE-NYC and NYC-SFO. However, in this embodiment they are no longer composed of only fares, but rather of fares plus the associated eco-surcharge.

At the time of the search capture of Figure 6, two solutions already exist as in the previous example, at prices of 60EUR and 99EUR. For NCE-NYC, there is a fare+ES whose amount is 16EUR and another fare+ES whose amount is 29EUR. The fare currently considered, without eco-surcharge, costs 10EUR. After adjunction of the eco-surcharge, the fare+ES costs 17EUR and is therefore more expensive than the candidate at 16EUR. The fare+ES at 16EUR thus rises to the top of the heap.

For NYC-SFO, there is a fare+ES whose amount is 55EUR and another fare+ES whose amount is 72EUR. The fare currently considered, without eco-surcharge, costs 42EUR. After adjunction of the eco-surcharge, the fare+ES costs 49EUR. However, it remains less expensive than the other fares+ES, and therefore remains at the top of heap.

A solution is constructed using the tops of the two heaps, i.e., in this example the fare+ES at 16EUR and the fare+ES at 49EUR, which together form a solution (base fare + eco-surcharge) at 65EUR. Without calculating the surcharges and taxes it can already be seen that this solution is more expensive than the solution at 60EUR. It can thus be appreciated that there has been a time and cost savings in avoiding the calculation of the surcharges and taxes. These savings are achieved by pre-calculating the eco-surcharges and thus this embodiment is more optimal than the first embodiment described above with respect to Figure 5.

The universal surcharge calculator 22 converts the universal weight into a priceable universal surcharge which can be compared to prices (base fares, surcharges, taxes) on which the search is performed.

An example of a transformation model is now described.

An exemplary set of requirements to transform a universal weight into a universal surcharge may be the following.

RULE 1: The universal surcharge is proportional to the recommendation amount (else the same surcharge applied to Economy class and First class would be substantially negligible in the First class case).

RULE 2: The universal surcharge is bounded when the universal weight varies from 0 to +infinity.

RULE 3: The universal surcharge increases when the universal weight increases.

RULE 4: The standard deviation of the universal surcharge divided by the amount to which it is applied is 1, thus priceable amounts and universal surcharges are strictly comparable for a search 50% oriented towards the universal criterion.

RULE 5: The applied surcharge is always positive.

One function that considers universal weights and the current amount, and which complies with these five rules, is described as follows.

Notations

Let n be the number of recommendations that will be returned.

Let $(W_i)_{1 \leq i \leq n}$ be the sequence of universal weights for the n recommendations.

Let W be the average of the sequence of universal weights.

Let $(a_i)_{1 \leq i \leq n}$ be the sequence of amounts for the n recommendations.

Let $(S_i)_{1 \leq i \leq n}$ be the sequence of universal surcharges for the n recommendations.

Consider recommendation r, with $1 \leq r \leq n$. The goal is to find $S_r = f((w_i), a_r)$.

In view of Rule 2, one can readily find bounds to f for a variable varying to - infinity to +infinity via the arctan function. But $W_r$ varies from 0 to +infinity. In order to have the variable vary in the desired range one can use instead $w_r - 1/w_r$. This varies from -infinity for $w_r \rightarrow 0^+$ and +infinity for $w_r \rightarrow$ +infinity.

In order to provide symmetry around the average of the universal weights, this can be improved to:

$$s_r = K. \, arctan(w_r/W - W/w_r),$$ where K remains to be defined.

This formula also satisfies rule 3: when $W_r$ increases from 0 to +infinity, $S_r$ increases to

- $K.\Pi/2$ to $+K.\Pi/2$.

According to Rule 1, $S_r$ must be proportional to $a_r$, and thus:

$$S_r = K'. \, a_r \, arctan(w_r/W - W/w_r),$$ where K' remains to be defined.

According to Rule 4, the standard deviation of $s_r/a_r$ must be 1.

Define the function g: $x \rightarrow arctan(x/W - W/x)$, and $\sigma_g$ the standard deviation of $g(wi)_{1 \leq i \leq n}$.

*Then $s_r = (a_r/\sigma_g). \, arctan(w_r/W - W/w_r)$.*

For Rule 5: there is introduced an offset so that whatever i in [1,n], $s_i \geq 0$.

The minimum value for $s_r$ corresponds to $w_r = 0+$, i.e. $S_r \, min = - (\Pi \, a_r / 2 \, \sigma_g)$

By adding this to the formula, what is obtained is:

$$s_r = (a_r / \sigma_g). \, (\Pi/2 \, arctan(w_r/W - W/w_r)).$$

W evolves as new recommendations are found. Thus, the universal surcharge is recalculated for all recommendations when a new recommendation is found.

The exemplary embodiments of this invention pertain at least in part to an enhancement to a price-based search engine to take into consideration dynamically during a search at least one non-priceable criterion, i.e., the universal criterion as described herein.

The price-based search engine can be used to search, as several non-limiting examples, air travel solutions, train travel solutions, hotel reservations, cruises, bonds or shares, or any common goods and / or services.

The universal criterion can be, as several non-limiting examples, environmental impact, social impact, protection of human rights and human dignity, or any affinity towards a subset of a set of goods which is searched.

An aspect of the exemplary embodiments is the transformation of a universal criterion into a priceable amount via the universal surcharge calculator 22. A further aspect of the exemplary embodiments is the dynamic incorporation of such universal surcharges in the algorithm of the dynamic search engine 20.

The exemplary embodiments of this invention, in one aspect thereof, enable dynamically taking into account the impact of the universal criterion into low fare searches, with a certain weight assigned to the low fare part and a certain weight assigned to the universal part.

For example, the user 5 may enter the following ecologically-based inquiry into the system 10:

Provide recommendations to travel from Paris to New York on October 27th, where the environmental impact of the travel must count for 30% of a proposed recommendation and 70% of a proposed recommendation should be based on lowest fare.

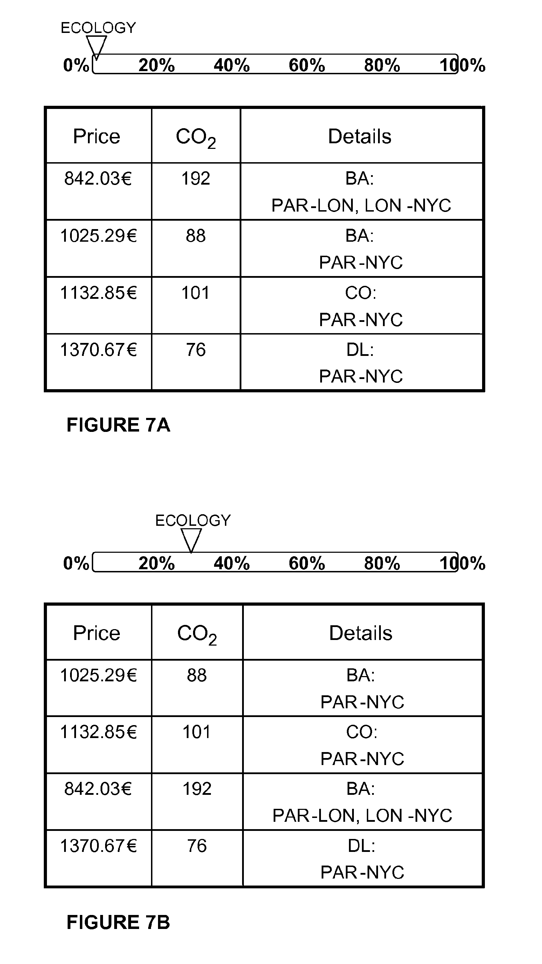

Figure 7A shows an exemplary travel board that is based on fare price only. With this conventional price-oriented search the least expensive solution is far from having the least environmental impact, as the journey has two legs PAR-LON and LON-NYC. The total $CO_2$ value is 192, which far exceeds the values for the more expensive solutions of the direct flights from PAR-NYC.

It can thus be appreciated that a travel solution can be selected that has less of an environmental impact if the user is willing to pay more to travel.

Figure 7B shows an example of a search that is 70% price-oriented and 30% ecology-oriented. In this case the user 5 has introduced a preference of 30% for ecology.

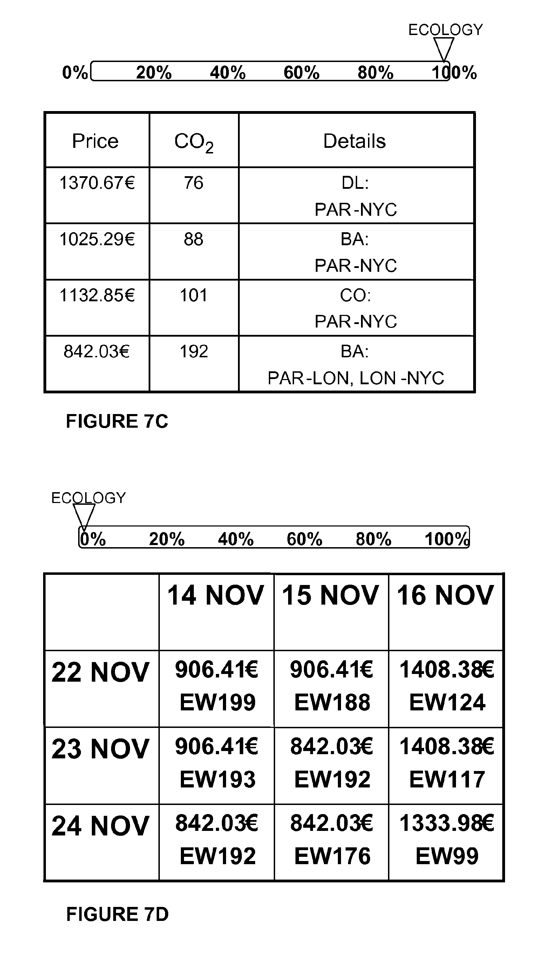

Figure 7C shows an example of a search that is 100% ecology oriented. In this case the user's only interest is choosing a travel solution that has the least environmental impact. The first recommendation is more expensive than the others, but is the best in terms of ecological impact (e.g., has a minimum ecological impact as compared to the other possible solutions).

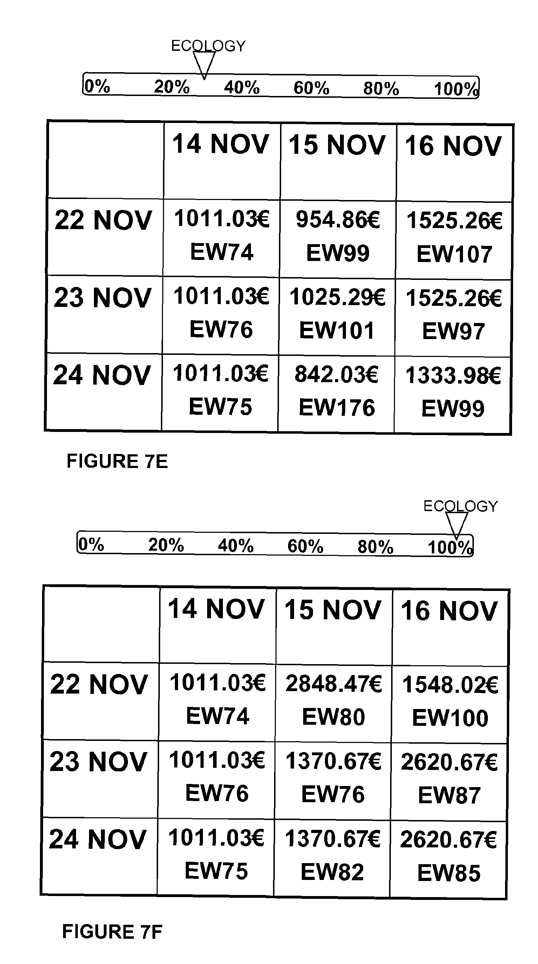

Described now in reference to Figures 7D, 7E and 7F are the same three percentages devoted to ecological impact (0%, 30%, 100%), but in the context of a calendar. In this non-limiting example it can be assumed that the user 5 has requested dates 15NOV+23NOV, but is flexible on dates +/-1 (i.e., fly out 14NOV to 16NOV and return 22NOV to 24NOV).

Figure 7D shows the example with the price-oriented search. The central solution 15NOV and 23NOV is the least expensive. However, it can be noted that by scheduling the return flight later by one day will reduce the ecological weight (EW) from 192 to 176. So, even though the user 5 did not indicate an ecological weight for the travel search, the user can still be presented with search result information that enables the user to make an informed travel choice that reduces the ecological impact of the trip (in this case by simply delaying the return flight by one day).

Figure 7E shows an example the search 70% price-oriented, 30% ecology-oriented. In this example the user 5 wanted ecology to play a part in the display of the travel recommendations and has a difficult choice to make. That is, the user can choose the cheapest flight, i.e., 842€, even though it is very polluting relative to the other flights, or the user can pay 954€, and pollute much less, or the user can add 57€ to travel on the least polluting recommendation.

Figure 7F shows an example of the display that is fully ecology-oriented. It appears by chance that travelling on 14NOV+22NOV is both the least expensive and the least detrimental to the environment. However, by comparing to Figure 7D is can be seen that the cheapest price in the price (only)-oriented search for this combination of dates is about 100€ less expensive.

In the foregoing exemplary embodiments it is assumed that the dynamic search engine 20 has access to certain data and information related to the universal criterion. As one non-limiting example, the universal search engine 20 can have access to a database or other source of information that provides the amount of carbon dioxide emitted for various flight legs or segments (e.g., some of this information may be available from the FIS 104 shown in Figure 2). This information can vary by carrier, and can in itself be related to, for example, the type of aircraft and / or age of the aircraft that flies each particular flight segment. Other types of emissions can also be considered, including emitted particulates. Other factors can also be considered including, but not limited to, typical or average taxi / waiting times at particular airports (which in turn can vary as a function of time of day and possibly also by day of the week, etc.) In general, any information can be considered that can provide a useful metric for determining values related to the universal criterion.

In Figures 7A-7F the illustrated "slider bar" labeled 'ecology' may be viewed as being a part of a graphical user interface presented to the users 5 on their respective terminals.

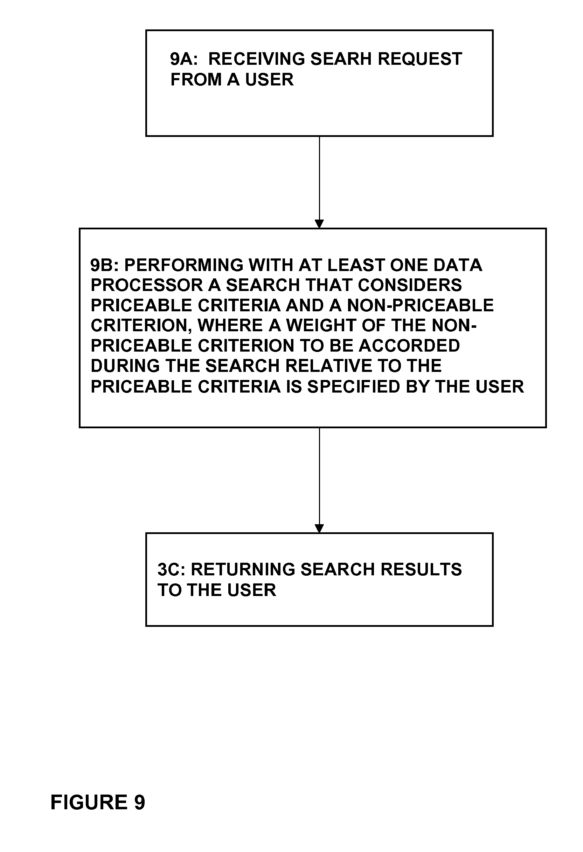

Figure 9 is a logic flow diagram that illustrates the operation of a method, and a result of execution of computer program instructions embodied on a computer readable memory, in accordance with the exemplary embodiments of this invention. Shown in Figure 9 is a method to provide a user with a set of solutions in response to a query of the user. At Block 9A there is a step of receiving a search request from the user. At Block 9B there is a step of performing with at least one data processor a search that considers priceable criteria and a non-priceable criterion, where a weight of the non-priceable criterion to be accorded during the search relative to the priceable criteria is specified by the user. At Block 9C there is a step of returning search results to the user.

In the method as depicted in Figure 9 the search is a travel-related search, where the priceable criteria comprise at least a fare amount, and where the non-priceable criterion is universal criterion such as an ecology-related criterion.

In the method as depicted in Figure 9 the search is a travel-related search, where the priceable criteria comprise at least a fare amount, a tax amount and a surcharge amount, and where the non-priceable criterion is related to an impact of the travel on the environment.

In the method as depicted in Figure 9 the weight is specifiable by the user from 0% to 100%, where 0% indicates that the non-priceable criterion is to be given no weight during the search and that the search should consider only the priceable criteria, and where 100% indicates that the priceable criteria is to be given all of the weight during the search and that the search should consider only the non-priceable criterion.

In the method as depicted in Figure 9, where performing the search comprises converting the weight of the non-priceable criterion to a priceable amount.

In the method as set forth in the preceding paragraph, where the search is a travel-related search, where the search results comprise a plurality of travel solutions each having an associated inherent cost comprising at least a fare cost stored in data storage means, where the priceable amount is positive and proportional to the inherent cost associated with each travel solution and increases in value as the value of the weight increases, and where a standard deviation of the priceable amount, divided by the inherent cost associated with a particular travel solution, is one.

In the method as set forth in the preceding paragraph, where a final cost of each reported travel solution comprises the sum of the inherent cost and the priceable amount.

In the method as set forth in the preceding paragraph, where during the search a plurality of candidate travel solutions are identified prior to selecting a travel solution or travel solutions to be reported to the user, and where at least the priceable amount is added when selecting the travel solution or solutions.

In the method as set forth in the preceding paragraphs, where during the search a plurality of candidate travel solutions are identified prior to selecting a travel solution or travel solutions to be reported to the user, and where at least the priceable amount is added to one or more candidate travel solutions prior to selecting the travel solution or solutions.

In the method as set forth in the preceding paragraphs, where the method is performed as a result of execution of computer software by at least one data processor, the computer software being stored in a non-transitory computer-readable memory medium.

Also encompassed by the exemplary embodiments is an on-line system that comprises means for receiving a search request from a user; means for performing a search that considers priceable criteria and a non-priceable criterion, where a weight of the non-priceable criterion to be accorded during the search relative to the priceable criteria is specified by the user; and means for returning search results to the user.

As can be appreciated, there are a number of benefits and technical effects that are realized by the use of the exemplary embodiments. For example, the use of the exemplary embodiments has the potential, in the ecological embodiment, to reduce carbon emissions by giving travelers an informed choice of travel venues. Further by example, for the users of the system 10 there is provided the ability to travel in an environmentally friendly way or to otherwise select one or more non-priceable criterion/criteria to be considered during a search. For the travel providers, such as airlines, there can be a number of benefits. As several examples there is the possibility to develop environmentally-friendly marketing options, or other special options, and adapt prices accordingly. In addition, there is the possibility to more easily isolate those flights which have a high environmental impact. In addition, taxes and tariffs can be more readily adjusted based on the environmental impact and/or on some other non-priceable criterion/criteria.

The foregoing description has provided by way of exemplary and non-limiting examples a full and informative description of various method, apparatus and computer program software for implementing the exemplary embodiments of this invention. However, various modifications and adaptations may become apparent to those skilled in the relevant arts in view of the foregoing description, when read in conjunction with the accompanying drawings and the appended claims.

For example, there are a number of potentially relevant non-priceable criteria that could be considered by the search engine 20, other than those specifically mentioned above.

Further by example, in some embodiments there may be more or less than three priceable factors (e.g., more or less factors than fares, taxes and surcharges, which represent but one non-limiting set of priceable factors.)

Further by example, it should be appreciated that the exemplary embodiments can be extended to consider two or more non-priceable factors, possibly thereby extending the dimensionality of the search space to five or more dimensions. For example, the user may be enabled to have a travel-related search performed that considers to some degree the environmental impact as well as the social impact of various travel solutions.

The use of other similar or equivalent modifications may be attempted by those skilled in the art. However, all such and similar modifications of the teachings of this invention will still fall within the scope of the embodiments of this invention.

Furthermore, some of the features of the exemplary embodiments of this invention may be used to advantage without the corresponding use of other features. As such, the foregoing description should be considered as merely illustrative of the principles, teachings and embodiments of this invention, and not in limitation thereof.

**Claims**

1. A method to provide a user with a set of solutions in response to a query of the user (5), comprising:

   receiving a search request from the user (5);
   performing with at least one data processor a search that considers priceable criteria stored in data storage means,
   **characterized in that** the search also considers a non-priceable criterion,
   where a weight of the non-priceable criterion to be accorded during the search relative to the priceable criteria is specified by the user (5); and
   where the weight of the non-priceable criterion is converted to a priceable amount,
   returning search results to the user and displaying the results through display means.

2. The method according to the preceding claim, where the weight is specifiable by the user from 0% to 100%, where 0% indicates that the non-priceable criterion is to be given no weight during the search and that the search should consider only the priceable criteria, and where 100% indicates that the non-priceable criterion is to be given all of the weight during the search and that the search should not consider the priceable criteria.

3. The method according to any one of the preceding claims, where the search is a travel-related search, where the search results comprise a plurality of travel solutions each having an associated inherent cost comprising at least a fare cost, where the priceable amount is positive and proportional to the inherent cost associated with each travel solution and increases in value as the value of the weight increases, and where a standard deviation of the priceable amount, divided by the inherent cost associated with a particular travel solution, is one.

4. The method according to any one of the preceding claims, where the search is a travel-related search, where the search results comprise a plurality of travel solutions each having an associated inherent cost comprising at least a fare cost stored in data storage means (16, 102), where the priceable amount is positive and proportional to the inherent cost associated with each travel solution and increases in value as the value of the weight increases, and where a final cost of each reported travel solution comprises the sum of the inherent cost and the priceable amount.

5. The method according to the preceding claim, where during the search a plurality of candidate travel solutions are identified prior to selecting a travel solution or travel solutions to be reported to the user, and where at least the priceable amount is added when selecting the travel solution or solutions.

6. The method according to the preceding claim, where candidate travel solutions are identified according to a first priceable criterion, and wherein travel solution or solutions are selected through adding to the candidate travel solutions amounts of all other priceable criteria and the priceable amount of the non priceable criteria.

7. The method according to claim 4, where during the search a plurality of candidate travel solutions are identified prior to selecting a travel solution or travel solutions to be reported to the user, and where at least the priceable amount is added to one or more candidate travel solutions prior to selecting the travel solution or solutions.

8. The method according to the preceding claim, where candidate travel solutions are identified according to a first priceable criterion, wherein the priceable amounts of the non priceable criterion are added to the candidate travel solutions to provide intermediate travel solutions, and wherein the selection of one or more travel solutions takes into account all other priceable criteria.

9. The method according to the preceding claim, where the intermediate solution is compared to an already processed travel solution and wherein the intermediate travel solution is discarded if said intermediate travel solution is more expansive than at least one already processed travel solution.

10. The method according to the preceding claim, where the results of the search comprise a plurality of sub-travel-product each having an associated inherent cost comprising at least a fare cost, and where an intermediate solution is formed by combining the intermediate solution for all sub-travel-products and where a final solution is obtained by taking into account the other priceable criteria for each sub-travel-product.

11. The method according to any one of the preceding claims, where the search is a travel-related search, where the priceable criteria comprise at least a fare amount, a tax amount and a surcharge amount, and where the non-priceable criterion is related to an impact of the travel on the environment.

12. Computer program product stored in a non-transitory computer-readable memory medium and comprising computer readable code means configured for causing at least one computer to operate the method according to any one of the preceding claims.

13. An on-line system comprising:

an interface with system users (5) configured to receive search requests from system users (5) ; and
a search engine (20) coupled with said interface, **characterized in that** said search engine (20) is configured to respond to a received search request from a user to perform a search that considers priceable criteria and a non-priceable criterion, where a weight of the non-priceable criterion to be accorded during the search relative to the priceable criteria is specified by the user, **in that** the system comprises a universal surcharge calculator (22) coupled with said search engine (20) and configured to convert the weight of the non-priceable criterion to a priceable amount, and **in that** the search engine (20) is configured to return search results to the user via said interface

14. The system of claim 13, where the search is a travel-related search, where the search results comprise a plurality of travel solutions each having an associated inherent cost comprising at least a fare cost, where the priceable amount is positive and proportional to the inherent cost associated with each travel solution and increases in value as the value of the weight increases, and arranged so that a final cost of each reported travel solution comprises the sum of the inherent cost and the priceable amount.

15. The system according to any one of the two preceding claims, arranged so that during the search a plurality of candidate travel solutions are identified prior to selecting a travel solution or travel solutions to be reported to the user, and at least the priceable amount is added to one or more candidate travel solutions prior to selecting the travel solution or so-

**EP 2 447 890 A1**

lutions, the system being further configured so that candidate travel solutions are identified according to a first priceable criterion, the priceable amounts of the non priceable criterion are added to the candidate travel solutions to provide intermediate travel solutions, and the selection of one or more travel solutions takes into account all other priceable criteria, the system being further arranged so that the intermediate solution is compared to an already processed travel solution and the intermediate travel solution is discarded if said intermediate travel solution is more expansive than at least one already processed travel solution.

Fare search query

request

**FIS**

Flights, associated AV

**103**

Travel Shopper

Search engine

**Fares**

**Surcharges**

**Taxes**

Fare
database

**102**

**100**

Price-oriented recommendations

**FIGURE 1**

Universally customized
fare search query

request

Flights, associated AV and UW

**FIS**

**104**

**Universal Travel Shopper**

Search engine

**Fares**

**Surcharges**

**20**

**Taxes**

**22**

Fare
database

**U/(1-U) x Universal
surcharge**

Fares + flights

Uni.-surcharges

Universal
surcharge
calculator

**102**

Price-oriented recommendations
with universal affinity

**200**

**FIGURE 2**

FIGURE 3

FIGURE 4

FIGURE 5

FIGURE 6

ECOLOGY

| 0% | 20% | 40% | 60% | 80% | 100% |

| Price | $CO_2$ | Details |
|---|---|---|
| 842.03€ | 192 | BA:<br>PAR-LON, LON -NYC |
| 1025.29€ | 88 | BA:<br>PAR -NYC |
| 1132.85€ | 101 | CO:<br>PAR -NYC |
| 1370.67€ | 76 | DL:<br>PAR -NYC |

**FIGURE 7A**

ECOLOGY

| 0% | 20% | 40% | 60% | 80% | 100% |

| Price | $CO_2$ | Details |
|---|---|---|
| 1025.29€ | 88 | BA:<br>PAR -NYC |
| 1132.85€ | 101 | CO:<br>PAR -NYC |
| 842.03€ | 192 | BA:<br>PAR-LON, LON -NYC |
| 1370.67€ | 76 | DL:<br>PAR -NYC |

**FIGURE 7B**

ECOLOGY

0% 20% 40% 60% 80% 100%

| Price | CO$_2$ | Details |
|-------|--------|---------|
| 1370.67€ | 76 | DL:<br>PAR -NYC |
| 1025.29€ | 88 | BA:<br>PAR -NYC |
| 1132.85€ | 101 | CO:<br>PAR -NYC |
| 842.03€ | 192 | BA:<br>PAR-LON, LON -NYC |

**FIGURE 7C**

ECOLOGY

0% 20% 40% 60% 80% 100%

| | 14 NOV | 15 NOV | 16 NOV |
|--------|--------|--------|--------|
| **22 NOV** | 906.41€<br>EW199 | 906.41€<br>EW188 | 1408.38€<br>EW124 |
| **23 NOV** | 906.41€<br>EW193 | 842.03€<br>EW192 | 1408.38€<br>EW117 |
| **24 NOV** | 842.03€<br>EW192 | 842.03€<br>EW176 | 1333.98€<br>EW99 |

**FIGURE 7D**

ECOLOGY

| 0% | 20% | 40% | 60% | 80% | 100% |

|         | 14 NOV       | 15 NOV        | 16 NOV        |
|---------|--------------|---------------|---------------|
| 22 NOV  | 1011.03€ EW74 | 954.86€ EW99 | 1525.26€ EW107 |
| 23 NOV  | 1011.03€ EW76 | 1025.29€ EW101 | 1525.26€ EW97 |
| 24 NOV  | 1011.03€ EW75 | 842.03€ EW176 | 1333.98€ EW99 |

FIGURE 7E

ECOLOGY

| 0% | 20% | 40% | 60% | 80% | 100% |

|         | 14 NOV       | 15 NOV         | 16 NOV         |
|---------|--------------|----------------|----------------|
| 22 NOV  | 1011.03€ EW74 | 2848.47€ EW80 | 1548.02€ EW100 |
| 23 NOV  | 1011.03€ EW76 | 1370.67€ EW76 | 2620.67€ EW87 |
| 24 NOV  | 1011.03€ EW75 | 1370.67€ EW82 | 2620.67€ EW85 |

FIGURE 7F

FIGURE 8

9A: RECEIVING SEARH REQUEST FROM A USER

9B: PERFORMING WITH AT LEAST ONE DATA PROCESSOR A SEARCH THAT CONSIDERS PRICEABLE CRITERIA AND A NON-PRICEABLE CRITERION, WHERE A WEIGHT OF THE NON-PRICEABLE CRITERION TO BE ACCORDED DURING THE SEARCH RELATIVE TO THE PRICEABLE CRITERIA IS SPECIFIED BY THE USER

3C: RETURNING SEARCH RESULTS TO THE USER

FIGURE 9

Europäisches
Patentamt
European
Patent Office
Office européen
des brevets

# EUROPEAN SEARCH REPORT

**Application Number**

EP 10 30 6119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | The technical aspects of the claimed invention relate to the use of general-purpose data processing technology for processing data of an inherently non-technical nature. The information technology employed is considered to generally known. See also Official Journal 11/2007, p. 592. XP007905525 | 1-15 | INV. G06Q10/00 G06Q50/00 |
| L | * the whole document * | 1-15 | |

TECHNICAL FIELDS
SEARCHED (IPC)

G06Q

The present search report has been drawn up for all claims

| Place of search | Date of completion of the search | Examiner |
|---|---|---|
| Munich | 9 February 2011 | Hopper, Eva |

EPO FORM 1503 03.82 (P04C01)